# EUROPEAN PATENT APPLICATION

(11) **EP 4 826 666 A1**
(43) Date of publication of application: **21.10.2026**
(21) Application number: 24902833.3
(22) Date of filing: 11.12.2024
(51) Int. Cl.: G06T 17/00

(54) **DIGITAL-MODEL GENERATION METHOD AND APPARATUS, AND DEVICE AND STORAGE MEDIUM**

(30) Priority: 11.12.2023 CN 202311698072
(71) Applicant: Shining 3D Tech Co., Ltd., Hangzhou, Zhejiang 311258 (CN)
(72) Inventor: ZHANG, Honggang, Hangzhou, Zhejiang 311258 (CN); JIANG, Tengfei, Hangzhou, Zhejiang 311258 (CN); LU, Yan, Hangzhou, Zhejiang 311258 (CN); MA, Chao, Hangzhou, Zhejiang 311258 (CN)
(74) Representative: Metida
(86) International application number: PCT/CN2024/138334
(87) International publication number: WO 2025/124413

(57) **Abstract**

The present disclosure relates to a method for generating a digital model, an apparatus, a device, and a storage medium. The method for generating the digital model includes: obtaining a scan model of a target object; identifying a model feature of the scan model, and converting the scan model according to the model feature to obtain a converted model located in a preset spatial coordinate system; determining a target region where a target element in the converted model is located, and cutting out a model to be processed from the converted model based on the target region, where the target element constitutes the target object; and performing a modeling processing on the model to be processed to generate a printable digital model. The provided method can generate an accurate printable digital model, greatly reduce interactive operations, effectively reduce time costs, and improve generation efficiency.

## Description

The present disclosure claims a priority to Chinese Patent Application No. 202311698072.3, filed with the China National Intellectual Property Administration on December 11, 2023, and entitled "DIGITAL-MODEL GENERATION METHOD, APPARATUS, DEVICE AND STORAGE MEDIUM", the entire contents of which are incorporated herein by reference.

### TECHNICAL FIELD

The present disclosure relates to a field of three-dimensional technology, and in particular, to a method for generating a digital-model, an apparatus, a device and a storage medium.

### BACKGROUND

In oral clinical applications, three-dimensional (3D) printing technology is gradually being widely used. For example, a dental model printed by a 3D device is used to create an archiving model, perform bracket try-on, and press a retainer.

Currently, digital scanning equipment is often used to obtain intraoral dental data of a patient. The dental data cannot be directly used for 3D printing. Model processing software is needed to convert the patient's dental data into a digital model, and then the 3D printing device is used to print a dental model that matches precisely with the patient's oral morphology. However, during a process of importing the dental data to generate a printable digital model, the digital model requires a series of interactive operations with a user to produce the digital model. Moreover, an adjustment process is cumbersome, which increases time costs and results in a low generation efficiency.

### SUMMARY

In order to solve the above technical problem, embodiments of the present disclosure provide a method for generating a digital model, an apparatus, a device, and a storage medium, which can generate an accurate printable digital model, greatly reduce interactive operations, effectively reduce time costs, and improve the generation efficiency.

In a first aspect, an embodiment of the present disclosure provides a method for generating a digital model, including:
Obtaining a scan model of a target object;
Identifying a model feature of the scan model, converting the scan model according to the model feature, and obtaining a converted model located in a preset spatial coordinate system;
Determining a target region where a target element in the converted model is located, and cutting out a model to be processed from the converted model based on the target region, the target element constituting the target object; and
Performing a modeling processing on the model to be processed, and generating a printable digital model.

Optionally, the obtaining the scan model of the target object includes:
Obtaining an initial model of the target object, wherein the initial model is a three-dimensional model including a plurality of triangular meshes;
Detecting all holes in the initial model, and determining a target hole among all of the holes; and
Filling the target hole along a surface trend of original triangular meshes around a boundary of the target hole, and obtaining the scan model.

Optionally, the determining the target hole among all of the holes includes:
Counting a first number of vertices of triangular meshes on the boundary of each hole, and determining a hole with the first number less than a first threshold as the target hole; and/or
Calculating a side length of all triangular meshes on the boundary of each hole, and determining a hole with the side length less than a second threshold as the target hole, wherein the side length is an average side length and/or a weighted side length.

Optionally, the obtaining the scan model of the target object includes:
Detecting, according to a topological structure, a triangular patch including triangular meshes in a target model, wherein the target model is the initial model or the scan model obtained after a hole filling; and
In a condition that the triangular patch is not connected to a target main body in the target model, determining whether a connected region of the triangular patch is less than a third threshold, and/or whether a number of triangular meshes forming the triangular patch is less than a fourth threshold, and in response to the connected region of the triangular patch being determined less than the third threshold, and/or the number of triangular meshes forming the triangular patch being determined less than the fourth threshold, removing the triangular patch, and obtaining the scan model;
Wherein the target main body is a largest connected region in the target model.

Optionally, the model feature includes a number of the target element and a position feature of the target element in the scan model.

Optionally, the converting the scan model according to the model feature, and obtaining the converted model located in the preset spatial coordinate system includes:
Obtaining a coordinate center position in the preset spatial coordinate system, and determining a center position of a bounding box that encloses the scan model based on the coordinate center position;
Fitting a contact surface between a first part of the target object and a second part of the target object according to the number of the target element and the position feature, wherein the first part and the second part form an entirety of the target object, and each the first part and the second part includes at least one target element;
Calculating a shape of the first part and/or a shape of the second part based on the number of the target element and the position feature, and determining a target axis based on the shape of the first part and/or the shape of the second part; and
Converting the scan model according to the center position of the bounding box, the target axis, and the contact surface, and obtaining the converted model located in the preset spatial coordinate system.

Optionally, the determining the target region where the target element in the converted model is located includes:
Identifying an initial region where the target element in the converted model is located;
Obtaining a base type to be added, and determining a boundary criterion according to the base type, wherein the boundary criterion is configured to limit an expansion degree of the initial region; and
Performing an expansion processing on the initial region based on a preset expansion principle and the boundary criterion, and obtaining the target region, wherein the preset expansion principle is a topological neighborhood extension without exceeding an arch-shaped region of the target object.

Optionally, the performing the modeling processing on the model to be processed, and generating the printable digital model includes:
Obtaining modeling parameters, wherein the modeling parameters include a shell thickness, a base type, and a base height;
Performing a shelling processing on the model to be processed based on the shell thickness to obtain a shelled model; and
Adding a base model to the shelled model based on the base type and the base height to generate the printable digital model.

Optionally, the adding the base model to the shelled model based on the base type and the base height to generate the printable digital model includes:
Extending the base height downward from a lowest point of a bottom of the shelled model according to the base type to add the base model to the shelled model; and
Performing a smoothing processing on a connection region between the base model and the shelled model using a triangular mesh interpolation to generate the printable digital model.

Optionally, the modeling parameters include a support type and text to be added, and after adding the base model to the shelled model, the method further includes:
Adding a mesh to the base model using a standard template model, wherein a mesh height corresponds to the base height;
Adding a support model to the shelled model with the added mesh based on the support type;

Vectorizing the text to be added to generate a text model, and adding the text model to a preset position of the shelled model; and
Performing a fusion processing on the shelled model, the base model, the support model, and the text model, and generating the printable digital model.

Optionally, the target object is a target jaw, the scan model is a jaw model, the shelled model is a jaw shell, and the support model is an articulator model.

Optionally, the adding the support model to the shelled model with the added mesh based on the support type includes:
Adding the articulator model to the jaw shell based on a placement principle, wherein the placement principle is that the articulator model is placed at a front end and a rear end of the jaw shell, and an upper base and a lower base of the articulator model are flush with and contact the base model during placement;
Performing a collision detection on the jaw shell and a connecting rod of the articulator model , and generating a detection result, wherein the connecting rod is configured to connect the upper base and the lower base of the articulator model; and
In a condition that the detection result indicates that the connecting rod collides with the jaw shell, adjusting the articulator model based on a collision depth and a collision direction in the detection result until the connecting rod does not collide with the jaw shell.

A second aspect of the present application provides an apparatus for generating a digital model, and including:
An acquisition unit configured to obtain a scan model of a target object;
A conversion unit configured to identify a model feature of the scan model, convert the scan model according to the model feature, and obtain a converted model located in a preset spatial coordinate system;
A determination unit configured to determine a target region where a target element in the converted model is located, and determine a model to be processed from the converted model based on the target region, the target element constituting the target object; and
A generation unit configured to perform a modeling processing on the model to be processed, and generate a printable digital model.

A third aspect of the present application provides an electronic device, and including:
A storage device;
A processor; and
A computer program;
Wherein the computer program is stored in the storage device and is configured to be executed by the processor to implement the method for generating the digital model.

A fourth aspect of the present application provides a computer-readable storage medium having a computer program stored thereon, wherein the computer program, when executed by a processor, implements the steps of the method for generating the digital model.

The present disclosure provides the method for generating the digital model. The scan model of the target object is obtained. The model feature of the scan model is identified, and the scan model is converted according to the model feature to obtain the converted model located in the preset spatial coordinate system. The target region where the target element in the converted model is located is determined, and the model to be processed is cut out from the converted model based on the target region, wherein the target element constitutes the target object. The modeling processing is performed on the model to be processed to generate a printable digital model. In the provided method, after importing the scan model and modeling parameters configured by a user, the scan model is converted and cropped to obtain a model to be processed suitable for modeling processing. Simultaneously, the scan model is adjusted and optimized, facilitating the subsequent generation of a printable model with a good effect based on the modeling parameters. Moreover, during the process of generating the digital model based on the scan model, the user does not need to perform interactive operations, simplifying the steps of generating the digital model.

### BRIEF DESCRIPTION OF THE DRAWINGS

The accompanying drawings, which are incorporated into and constitute a part of this specification, illustrate embodiments consistent with the present disclosure and, together with the description, serve to explain the principles of the present disclosure.

In order to more clearly illustrate the embodiments of the present disclosure or the technical solutions in the prior art, the drawings required for the description of the embodiments or the prior art will be briefly introduced below. Obviously, for those of ordinary skill in the art, other drawings can be obtained based on these drawings without creative effort.
FIG. 1 is a schematic flowchart of a method for generating a digital model provided by an embodiment of the present disclosure;
FIG. 2 is a schematic diagram of an interface provided by an embodiment of the present disclosure;
FIG. 3 is a partial schematic diagram of an initial model provided by an embodiment of the present disclosure;
FIG. 4 is a detailed flowchart of block S102 of the flow chart shown in FIG. 1 of an embodiment according to the present disclosure;
FIG. 5 is a schematic cross-sectional view of a converted model provided by an embodiment of the present disclosure;
FIG. 6 is a detailed flowchart of block S103 of the flow chart shown in FIG. 1 of an embodiment according to the present disclosure;
FIG. 7 is a schematic diagram of a target region provided by an embodiment of the present disclosure;
FIG. 8 is a detailed flowchart of block S104 of the flow chart shown in FIG. 1 of an embodiment according to the present disclosure;
FIG. 9 is a schematic diagram of a shelled model provided by an embodiment of the present disclosure;
FIG. 10 is a schematic diagram of modeling of a digital model provided by an embodiment of the present disclosure;
FIG. 11 is a schematic flowchart of a method for generating a digital model provided by another embodiment of the present disclosure;
FIG. 12 is a schematic structural diagram of an apparatus for generating a digital model provided by an embodiment of the present disclosure; and
FIG. 13 is a schematic structural diagram of an electronic device provided by an embodiment of the present disclosure.

### DETAILED DESCRIPTION

In order to more clearly understand the above-mentioned objects, features, and advantages of the present disclosure, the solution of the present disclosure will be further described below. It is to be noted that, without conflict, the embodiments of the present disclosure and the features in the embodiments can be combined with each other.

In the following description, many specific details are set forth in order to facilitate a full understanding of the present disclosure, but the present disclosure can also be implemented in other ways different from those described herein. Obviously, the embodiments in the specification are only a part of the embodiments of the present disclosure, not all of the embodiments.

In response to the above technical problem, an embodiment of the present disclosure provides a method for generating a digital model. After a user imports an original scan model and inputs modeling parameters, the scan model is processed through a series of steps to obtain a model to be processed. Subsequently, the model to be processed is modeled into a printable digital model based on the modeling parameters. During the process of generating the digital model, no interactive operation with the user is required, which improves modeling efficiency and saves the user's time. Especially for users who are new to 3D printing, there is no need to learn 3D printing related technologies, reducing a learning cost. At the same time, the generated digital model can be directly exported and printed without adjustment, greatly simplifying the user's workflow. Specifically, a detailed description can be provided through one or more of the following embodiments.

Specifically, the method for generating the digital model can be executed by a scanning device or a terminal. For example, the scanning device or the terminal can generate a printable digital model based on an acquired scan model. For example, in one application scenario, the scanning device scans a target object to obtain a scan model. The terminal obtains the scan model from the scanning device and generates a printable digital model based on the acquired scan model. The scan model can be constructed by the scanning device based on scan data. Alternatively, the scan model is obtained by the scanning device from another device. Alternatively, the scan model is a model obtained by the scanning device after performing a three-dimensional reconstruction processing on the scan data. The scan data can be obtained by scanning with the scanning device, or the scan data can be obtained by the scanning device from another device. The other device is not specifically limited herein.

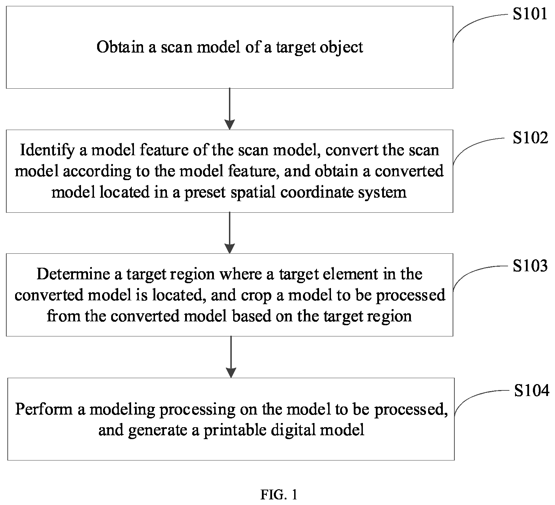

FIG. 1 is a schematic flowchart of a method for generating a digital model provided by an embodiment of the present disclosure. The method is applied to a terminal, and the terminal generates a digital model that can be printed based on a scan model that has been acquired. The following embodiments are described by taking the scan model as a jaw model as an example, specifically including steps S101 to S104 as shown in FIG. 1.

S101: A scan model of a target object is obtained.

It is understandable that the scan model of the target object is obtained. The scan model specifically is a jaw model. The jaw model is generated by scanning a target user's jaw or oral cavity with a scanning device to obtain scan data and performing a three-dimensional reconstruction based on the scan data.

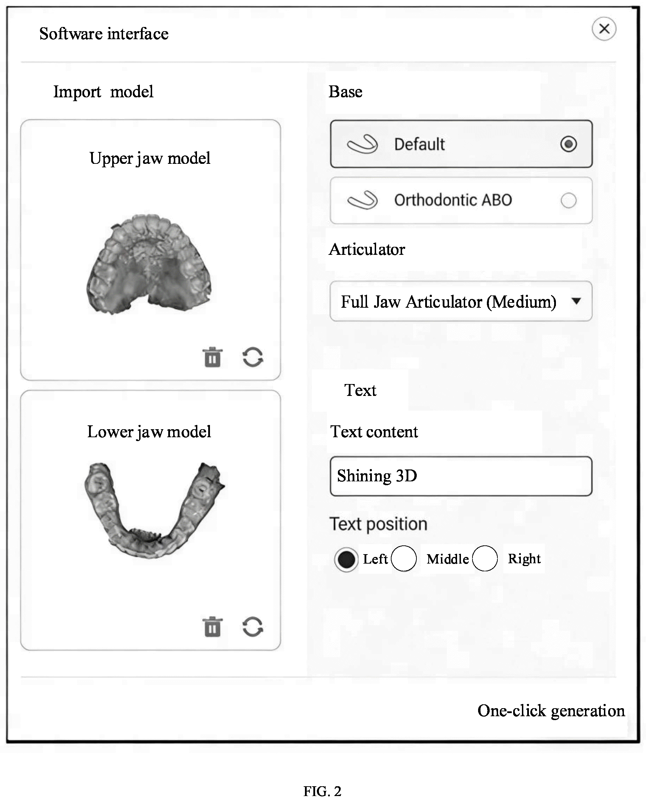

Exemplarily, see FIG. 2, which is a schematic diagram of an interface provided by an embodiment of the present disclosure, specifically referring to a software interface of an application program configurable to execute the method for generating the digital model. The application program can be deployed on a terminal. A user imports a jaw model and configures modeling parameters in the software interface. As shown in FIG. 2, the jaw model is divided into an upper jaw model and a lower jaw model. The modeling parameters specifically include base-related parameters, articulator-related parameters, text-related parameters, and the like. After the user triggers a generation identifier in the software interface, the terminal, in response to the triggering operation of the generation identifier, models the jaw model into a printable digital model based on the modeling parameters.

Optionally, the obtaining the scan model of the target object in S101 can be specifically implemented by the following steps:

Obtaining an initial model of the target object, where the initial model is a three-dimensional model composed of a plurality of triangular meshes; detecting all holes in the initial model, and determining a target hole among all of the holes; and obtaining the scan model by filling the target hole along a surface trend of original triangular meshes around a boundary of the target hole.

It is understandable that the initial model of the target object is obtained. The initial model is a three-dimensional mesh model composed of a plurality of triangular meshes. Subsequently, preprocessing is performed on the initial model to obtain the scan model. Specifically, all holes in the mesh model are detected based on a triangular mesh topological structure. Each hole is a cavity in the model. Subsequently, a small hole is taken as the target hole, and a hole filling operation is performed on the target hole along the surface trend of the original triangular meshes around the boundary of the target hole, i.e., the hole is filled along the surface trend of the original triangular meshes. Specifically, a method of first-order continuity using a Laplacian operator can be used for hole filling.

Optionally, the determining the target hole among all of the holes can be specifically implemented by the following steps:
Counting a first number of vertices of triangular meshes on the boundary of the hole, and determining a hole with the first number less than a first threshold as the target hole; and/or, calculating a side length of all triangular meshes on the boundary of the hole, and determining a hole with the side length less than a second threshold as the target hole, where the side length is an average side length and/or a weighted side length.

It is understandable that the method of determining the target hole is as follows: counting the number of vertices of all triangular meshes on the boundary of each hole, recorded as a first number, and determining the hole with the first number less than the first threshold among all holes as the target hole; and/or, calculating the sum of side lengths of all triangular meshes on the boundary of each hole, and determining the hole with the sum of side lengths less than the second threshold as the target hole; and/or, after the sum of side lengths is calculated, calculating the average side length of the triangular meshes, and if the average side length is less than the second threshold, determining the hole as the target hole. It is understandable that if a certain hole satisfies any condition among the side length being less than the second threshold and the number of vertices being less than the first threshold, then the certain hole is determined as the target hole (e.g., the small hole).

Optionally, the obtaining the scan model of the target object in S101 can be specifically implemented by the following steps:
Detecting a triangular patch composed of triangular meshes in the target model according to a topological structure, where the target model is the initial model or the scan model obtained after hole filling; in a case where the triangular patch is not connected to a target main body in the target model, determining whether a connected region of the triangular patch is less than a third threshold, and/or determining whether a number of triangular meshes forming the triangular patch is less than a fourth threshold; in response to the connected region of the triangular patch being determined less than the third threshold, and/or the number of triangular meshes forming the triangular patch being determined less than the fourth threshold, removing the triangular patch to obtain the scan model, where the target main body is a largest connected region in the target model.

It is understandable that after the hole filling operation for the small hole on the initial model is completed to obtain the scan model, triangular patches in the scan model are detected according to the topological structure. Alternatively, before the hole filling operation is completed, triangular patches in the initial model are detected, where the triangular patch is composed of at least one triangular mesh, and the triangular patch can be understood as the connected region. Subsequently, a largest connected region among all triangular patches is determined as the target main body, such as a jaw main body. If a certain triangular patch is not connected to the target main body and the connected region of the triangular patch is less than the third threshold, it indicates that the triangular patch is a floating patch, and the triangular patch is removed from the model. Alternatively, it can be determined whether the number of triangular meshes forming the triangular patch is less than the fourth threshold. If the number of triangular meshes forming the triangular patch is less than the fourth threshold, the triangular patch is removed. If the number of triangular meshes forming the triangular patch is greater than or equal to the fourth threshold or the triangular patch is connected to the target main body, the triangular patch is retained. That is, if any triangular patch satisfies at least one condition of having an area less than the third threshold and having a number of meshes less than the fourth threshold, the triangular patch is removed from the model. It is understandable that an order of performing the hole filling operation for small holes and the operation of removing floating patches is not limited, and the two preprocessing operations can also be performed simultaneously.

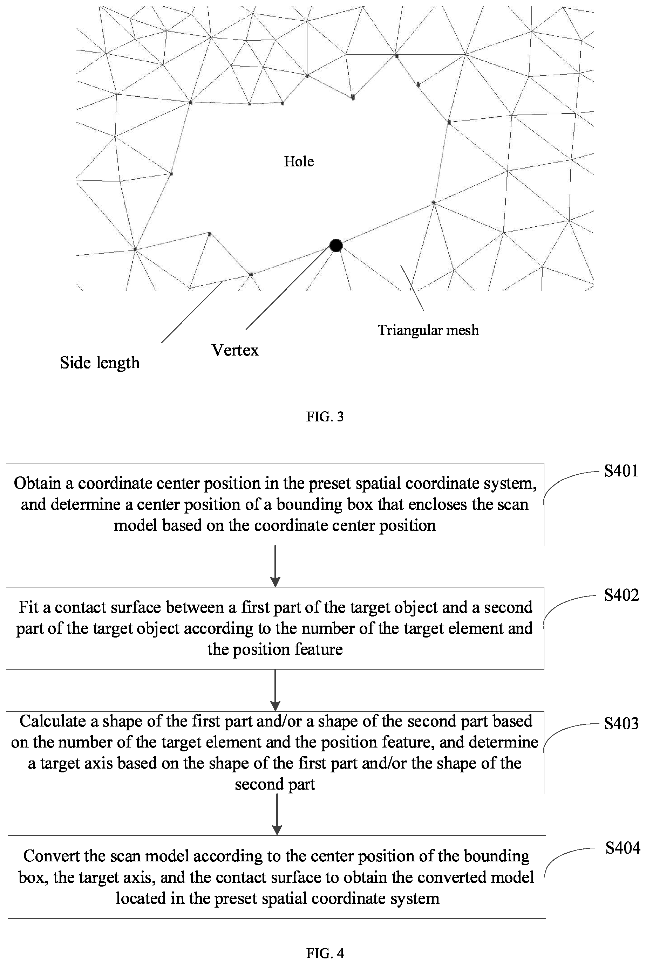

Exemplarily, see FIG. 3, which is a partial schematic diagram of an initial model provided by an embodiment of the present disclosure. FIG. 3 specifically is a schematic diagram of a hole. The hole is a cavity formed by connecting multiple triangular meshes. The boundary of the hole includes multiple triangular meshes, each triangular mesh having two vertices and one side length. Specifically, the target hole can be determined by counting the number of vertices, the average side length, and/or the sum of side lengths. For specific determination steps, refer to the above embodiment, which will not be repeated here.

S102: A model feature of the scan model is identified, and the scan model is converted according to the model feature to obtain a converted model located in a preset spatial coordinate system.

It is understandable that, on the basis of S101, after the initial model is preprocessed to obtain the scan model, the model feature of the scan model can be identified using a recognition algorithm. The model feature can be feature information such as a number of the target element and a position of the target element in the scan model, where the model feature specifically is a jaw model feature, and the target element is a single tooth. The jaw model feature includes the number of the single tooth and position information of the single tooth in the jaw model. After the model feature is identified, the scan model is straightened to obtain the converted model, where straightening is aligning the scan model into the preset spatial coordinate system, i.e., converting the scan model into the preset spatial coordinate system.

S103: A target region where the target element in the converted model is located is determined, and a model to be processed is cut out from the converted model based on the target region.

The target element constitutes the target object.

It is understandable that, on the basis of S102 above, after the scan model is straightened, the target region where the target element in the converted model is located is identified. For example, a tooth region of the jaw model is identified by a recognition method. The specific recognition method is not limited. Subsequently, the tooth region is cut out from the converted model, retaining only the model corresponding to the tooth region, to obtain the model to be processed. Alternatively, the target region where the target element in the scan model is located is identified, and after the model to be processed is determined, the hole filling is performed on the model to be processed. The specific order of processing is not limited.

S104: A modeling processing is performed on the model to be processed to generate a printable digital model.

It is understandable that, on the basis of S103 above, after the target region is cut out from the converted model to obtain the model to be processed, the modeling processing is performed on the model to be processed to generate the printable digital model. Alternatively, after the target region is determined from the scan model, the scan model is cut based on the target region to obtain the model to be processed. The modeling processing includes, but is not limited to, a shelling processing, a base processing, a boundary processing, a text addition, and the like.

In the method for generating the digital model provided by the embodiment of the present disclosure, after obtaining the initial model by scanning a jaw and obtaining modeling parameters configured by a user, the hole filling and a floating patch removal are performed on the initial model to obtain the jaw model, thereby improving the accuracy of a subsequently generated printable digital model. Subsequently, the jaw model is straightened, the tooth region in the jaw model is identified, and the tooth region is appropriately expanded to form a cropping retention region, so as to retain complete tooth information. Finally, the jaw model is cropped based on the cropping retention region to obtain the model to be processed, and modeling processes such as shelling, base addition, articulator addition, and text addition are performed on the model to be processed to obtain an accurate and directly printable digital model. During the process of generating the digital model based on the scan model, manual interactions are effectively reduced, modeling efficiency is improved, and the user's learning cost is further reduced.

Based on the above embodiment, FIG. 4 is a detailed flowchart of S102 in the method for generating the digital model shown in FIG. 1. Optionally, the converting the scan model according to the model feature to obtain the converted model located in the preset spatial coordinate system specifically includes steps S401 to S404 as shown in FIG. 4.

The model feature includes a number of the target element and a position feature of the target element in the scan model.

S401: A coordinate center position in the preset spatial coordinate system is obtained, and a center position of a bounding box that encloses the scan model is determined based on the coordinate center position.

It is understandable that the coordinate center of the preset spatial coordinate system is determined, and the coordinate center is used as a coordinate center of the straightened scan model. Based on this coordinate center, the bounding box capable of enclosing the scan model as the whole is constructed. A center position of the bounding box is an origin of XYZ axes. The bounding box can be understood as a rectangular box enclosing the scan model.

S402: A contact surface between a first part of the target object and a second part of the target object is fitted according to the number of the target element and the position feature.

The first part and the second part form an entirety of the target object, and the first part and the second part are each composed of at least one target element.

It is understandable that, on the basis of S401 above, after the model feature of each target element in the scan model is identified using a recognition algorithm, the contact surface is fitted according to the number (e.g., a label) of each target element and a set of position feature points of all target elements in the scan model. Based on the example, the target element is a single tooth, that is, an XY plane is fitted according to the number of each tooth and the set of position feature points composed of the position features of all teeth in the jaw model. The contact surface is the XY plane. A complete jaw model includes a first part and a second part, and the first part is an upper jaw model, and the second part is a lower jaw model. The XY plane is typically located at an occlusal surface of the upper and lower jaw models. It is understandable that the number of parts into which the target object is divided is not limited, and the contact surface may differ depending on the parts divided. The specifics can be determined according to user requirements.

S403: A shape of the first part and/or a shape of the second part are calculated based on the number of the target element and the position feature, and a target axis is determined based on the shape of the first part and/or the shape of the second part.

It is understandable that, on the basis of S402 above, the shape of the first part and/or the shape of the second part are calculated according to the number of each target element and the set of position feature points. Each part is composed of multiple target elements, and each part has a corresponding set of numbers and a corresponding set of position feature points. The target elements corresponding to different parts may be the same or different. For example, taking the first part as a lower jaw model, an arch shape of the lower jaw model is calculated based on the numbers of all teeth located in the lower jaw and the set of position feature points formed thereby. The target axis can be determined based on the arch shape of the lower jaw model, or can be determined jointly based on the arch shapes of the upper and lower jaw models. Specifically, a symmetry axis of the jaw arch shape is taken as the target axis, and the target axis is the Y-axis.

S404: The scan model is converted according to a center position of the bounding box, the target axis, and the contact surface to obtain a converted model located in the preset spatial coordinate system.

It is understandable that, on the basis of S403 above, the X-axis is determined according to the Y-axis, the center position of the bounding box, and the contact surface, where the X-axis can be determined according to a righthand rule. Subsequently, the Z-axis is determined according to the X-axis and the Y-axis. Based on the XYZ axes, a pose conversion is performed on the scan model to convert the scan model from its original spatial coordinate system to the preset spatial coordinate system, and obtaining the converted model.

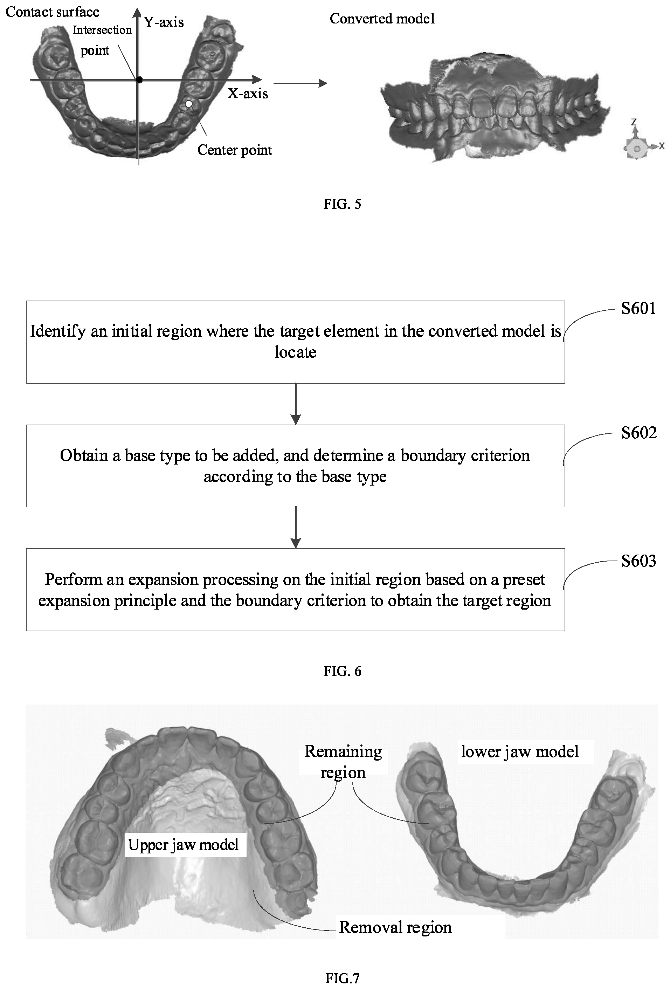

Exemplarily, see FIG. 5, which is a schematic cross-sectional view of a converted model provided by an embodiment of the present disclosure. The schematic cross-sectional view (e.g., the contact surface) of the converted model is specifically a schematic diagram of a lower jaw model, which can also be understood as a schematic cross-sectional view of the Z-axis. A intersection point of the X-axis and the Y-axis is the center position of the bounding box. As shown in FIG. 5, each tooth has a center point. The position of the tooth in the lower jaw model is the position of the tooth's center point in the lower jaw model. A complete converted model after straightening is specifically shown in FIG. 5.

In the method for generating the digital model provided by the embodiment of the present disclosure, the jaw model is straightened by identifying its features and aligned into the preset spatial coordinate system, facilitating subsequent modeling processing.

Based on the above embodiment, FIG. 6 is a detailed flowchart of S103 in the method for generating the digital model shown in FIG. 1. Optionally, the determining the target region where the target element in the converted model is located specifically includes steps S601 to S603 as shown in FIG. 6.

S601: An initial region where the target element in the converted model is located is identified.

It is understandable that the initial region where the target element in the converted model is located is identified using a recognition algorithm. It is understandable that the identified initial region may include an incomplete target element or may include target elements that are not connected. Therefore, it is necessary to appropriately expand the initial region to retain as much complete information of the target element as possible. The initial regions of the upper and lower jaw models can be determined simultaneously or separately.

S602: A base type to be added is obtained, and a boundary criterion is determined according to the base type.

The boundary criterion is configured to limit an expansion degree of the initial region.

It is understandable that the modeling parameters configured by the user are obtained. The modeling parameters include the base type to be added. The boundary criterion is determined according to the base type. The boundary criterion is configured to limit the expansion degree of the initial region, meaning the expansion degree of the initial region has different boundary criteria depending on the base type of the model.

S603: An expansion processing is performed on the initial region based on a preset expansion principle and the boundary criterion to obtain the target region.

The preset expansion principle is topological neighborhood extension without exceeding an arch-shaped region of the target object.

It is understandable that, on the basis of S601 and S602 above, the initial region is expanded according to the preset expansion principle and the boundary criterion determined based on the base type to obtain the target region. The target region can be understood as a cropping retention region. The remaining region excluding the cropping retention region is the removal region. The expansion principle is set to topological neighborhood extension without exceeding the arch-shaped region. The arch-shaped region is obtained by fitting the overall jaw, meaning the initial region is expanded based on the overall arch shape of the jaw.

Exemplarily, see FIG. 7, which is a schematic diagram of a target region provided by an embodiment of the present disclosure, specifically a schematic diagram of tooth regions in the upper and lower jaw models after expansion processing. The tooth region is the retention region, and the remaining region is the removal region. The expansion method is expansion based on the overall arch shape of the jaw.

In the method for generating the digital model provided by the embodiment of the present disclosure, the tooth region in the jaw model is identified and appropriately expanded to respectively form cropping retention regions for the upper and lower jaws, thereby maximizing the retention of tooth information, facilitating subsequent tooth modeling.

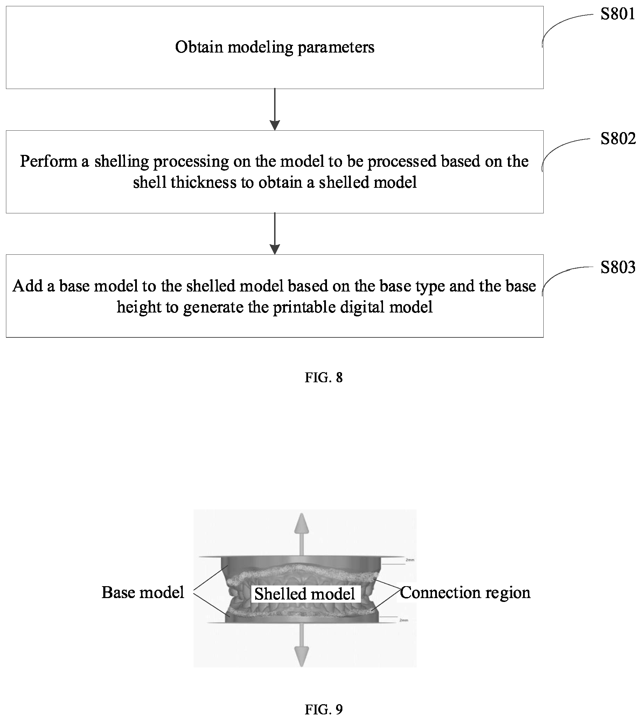

Based on the above embodiment, FIG. 8 is a detailed flowchart of S104 in the method for generating the digital model shown in FIG. 1. Optionally, the performing the modeling processing on the model to be processed to generate the printable digital model specifically includes steps S801 to S803 as shown in FIG. 8.

S801: Modeling parameters are obtained.

The modeling parameters include a shell thickness, a base type, and a base height.

It is understandable that the modeling parameters are set by the user when logging into the software interface. The user can set parameters such as the base type, the base height, an articulator type, the shell thickness, and text to be added.

S802: A shelling processing is performed on the model to be processed based on the shell thickness to obtain a shelled model.

It is understandable that, on the basis of S801 above, the shelling processing is performed on the model to be processed according to the shell thickness to obtain the shelled model. Preferably, the shell thickness can be 2 mm.

S803: A base model is added to the shelled model based on the base type and the base height to generate the printable digital model.

Optionally, the adding the base model to the shelled model based on the base type and the base height to generate the printable digital model in S802 above can be specifically implemented by the following steps:

Extending the base height downward from a lowest point of a bottom of the shelled model according to the base type to add the base model to the shelled model; performing a smoothing processing on a connection region between the base model and the shelled model using triangular mesh interpolation to generate the printable digital model.

It is understandable that, on the basis of S801 and S802 above, the base model is determined based on the base type and the base height, and the base model is added to the shelled model. The shell thickness and the base width can be the same. The base model generally extends the base height downward from the lowest point of the bottom of the shelled model. The base height can be 2 mm. The region where a tooth root connects to a gum can be considered the bottom, and a tooth crown part can be considered the top, meaning the extension is 2 mm from the root part, while the base width corresponds to the shell thickness of 2 mm.

Exemplarily, see FIG. 9, which is a schematic diagram of a shelled model provided by an embodiment of the present disclosure. The shelled model shown in FIG. 9 is a first model obtained after shelling and base addition. The base height of the base model is 2 mm, and the base width is consistent with the shell thickness. The connection region between the base model and the shelled model may have a smoothing issue. Therefore, the triangular mesh interpolation is used to smooth the connection region between the base and the shell. At the same time, the cropped model to be processed may have a warping issue, so it is also necessary to preprocess a model boundary to address the smoothing issue in the connection region between the base and the shell.

Optionally, the modeling parameters include a support type and a text to be added.

Optionally, after adding the base model to the shelled model, the method further includes:

Adding a mesh to the base model using a standard template model, where a mesh height corresponds to the base height; adding a support model to the shelled model with the added mesh based on the support type; vectorizing the text to be added to generate a text model, and adding the text model to a preset position of the shelled model; performing a fusion processing on the shelled model, the base model, the support model, and the text model to generate the printable digital model.

The target object is a target jaw, the scan model is a jaw model, the shelled model is a jaw shell, and the support model is an articulator model.

It is understandable that, a bottom mesh is added on the model with the shelled and added base. The mesh height corresponds to the base height, for example, 2 mm. The mesh can use the standard template model, and the mesh model is obtained by cropping an inner wall of the base of the shelled model, where the mesh type is not limited. Subsequently, the support model is added to the model with the added mesh. The support model is configured to support the jaw model, ensuring the stability of the upper and lower jaw models while preserving the occlusal relationship. Subsequently, text is added to the jaw model. Specifically, a font vectorization is performed on the text to be added, converting character-type texts into vectors, and a text model with a certain thickness is generated. At the same time, based on a preset placement position of the text on the jaw model (preset position), a starting point for the text on the jaw model is calculated, and each text model is sequentially arranged on the jaw model, wherein each character corresponds to a text model. Specifically, the placement position of the text on the jaw model can also be determined by the following steps: selecting a placement region for adding text on the jaw model, the dental arch can be divided to determine at least one placement region, such as the left side, right side, and middle of the jaw model. In this region, the overall text arrangement segment is calculated, and the initial text position is sequentially calculated. Taking the lower jaw as an example, the bottom of the text can be set at a height of 0.5 mm upward from the bottom surface of the lower jaw model. After completing shelling, base addition, mesh addition, text addition, and articulator addition for the model to be processed, the models corresponding to each element are fused to generate a printable digital model. The printable digital model can be understood as a printable model, that is, Boolean operations, such as Boolean addition, are performed on the jaw model, base model, text model, mesh model, and articulator model to fuse the several models into one, obtaining the final printable model. In the printable model, the upper and lower jaw models can be separated, allowing the user to view the complete oral cavity. It is understandable that the concavity or convexity of the text can be achieved by selecting the text model and the jaw model and performing Boolean addition or Boolean subtraction.

Optionally, the adding the support model to the shelled model with the added mesh based on the support type can be specifically implemented by the following steps:

Adding the articulator model to the jaw shell based on a placement principle, where the placement principle is that the articulator model is placed at a front end and a rear end of the jaw shell, and an upper base and a lower base of the articulator model are flush with and contact the base model during placement; performing a collision detection on the jaw shell and a connecting rod of the articulator model to generate a detection result, where the connecting rod is configured to connect the upper base and the lower base of the articulator model; in response to the detection result indicating that the connecting rod collides with the jaw shell, adjusting the articulator model based on a collision depth and a collision direction in the detection result until the connecting rod does not collide with the jaw shell.

It is understandable that the articulator model is obtained, and based on the position of the base of the jaw model (jaw shell with added base), the articulator model and the base model are aligned flush, i.e., the upper part of the articulator model is flush with the base model of the upper jaw model, and the lower part of the articulator model is flush with the base model of the lower jaw model, so as to separate the upper and lower jaw models. The articulator model is further divided into a front articulator and a rear articulator, which are placed at the front end and the rear end of the jaw model, respectively. The front articulator is placed in the arch opening region of the jaw model, and correspondingly, the rear articulator is placed at the rear end of the jaw model. Additionally, when placing the articulator, it is also necessary to avoid collision between the upper and lower connecting rods of the articulator model and the jaw model, wherein the upper and lower connecting rods are configured to connect the upper and lower jaw models. Specifically, collision detection is performed between the connecting rod and the jaw model using a collision detection algorithm to obtain a collision detection result. The collision detection result includes a result indicating collision between the connecting rod and the jaw model, and a result indicating no collision between the connecting rod and the jaw model. If the connecting rod collides with the jaw model, the placement position of the articulator model is adjusted based on the collision depth and collision direction included in the collision detection result. If the connecting rod does not collide with the jaw model, the placement of the articulator model is completed.

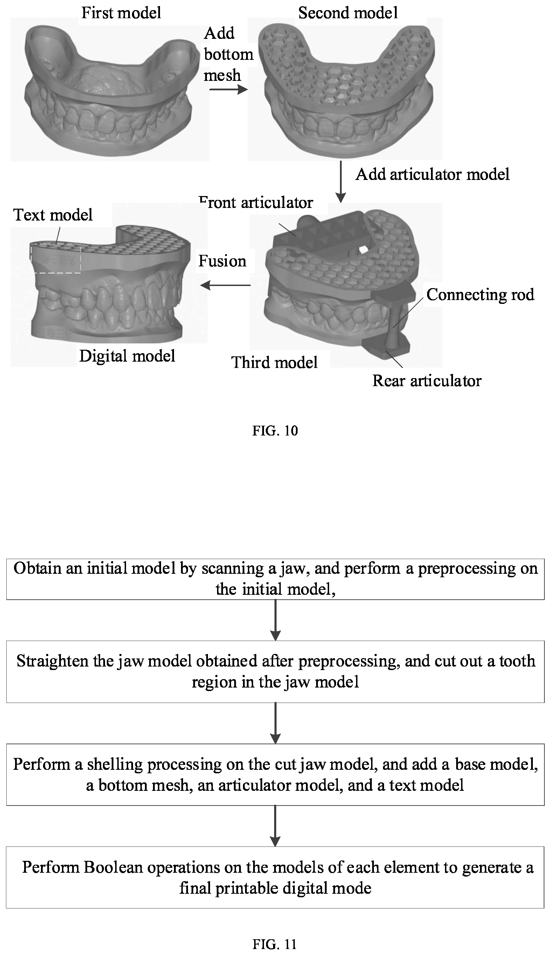

Exemplarily, see FIG. 10, which is a schematic diagram of modeling of a digital model provided by an embodiment of the present disclosure. Shelling and base addition are performed on the model to be processed to obtain a first model. In the first model, the base height of the base model is 2 mm, and the base width is consistent with the shell thickness. A bottom mesh is added to the first model to obtain a second model, where the mesh height is consistent with the base height. An articulator model is added to the second model to obtain a third model, where the articulator model includes a front articulator and a rear articulator, each end of the articulator including a connecting rod, and the connecting rod is configured to preserve an occlusal relationship of the upper and lower jaw models. A text model is added to the third model. Subsequently, the text model, the shelled model, the base model, and the articulator model are fused to generate a printable digital model. It is understandable that the order of adding the articulator model and adding the text model is not limited, and the text model can be added after the articulator model has been added to avoid the articulator model from obscuring the added text model.

In the method for generating the digital model provided by the present disclosure, after the shelling processing is performed on the model to be processed to obtain a shelled model, a base model, an articulator model, a mesh model, a text model, etc., can also be added to the shelled model to generate a flexible, stable, smooth, and aesthetically pleasing digital model.

Based on the above embodiment, FIG. 11 is a schematic flowchart of a method for generating a digital model provided by an embodiment of the present disclosure. An initial model is obtained by scanning a jaw, and a preprocessing is performed on the initial model. The preprocessing includes a hole filling and a removal of floating patches. The jaw model obtained after preprocessing is straightened, and a tooth region in the jaw model is cut out. A shelling processing is performed on the cut jaw model, and a base model, a bottom mesh, an articulator model, and a text model are added. Boolean operations are performed on the models of each element to generate a final printable digital model.

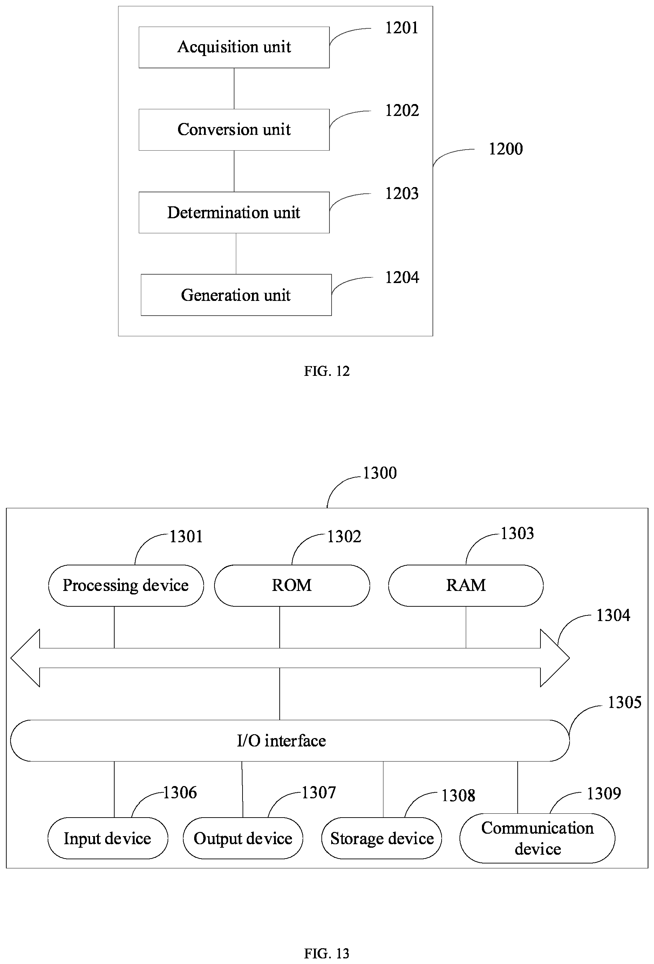

FIG. 12 is a schematic structural diagram of an apparatus for generating a digital model provided by an embodiment of the present disclosure. The apparatus provided by the embodiment of the present disclosure can execute the processing flow provided by the method embodiment for generating the digital model. As shown in FIG. 12, the apparatus 1200 includes an acquisition unit 1201, a conversion unit 1202, a determination unit 1203, and a generation unit 1204, where:

The acquisition unit 1201 is configured to obtain a scan model of a target object.

The conversion unit 1202 is configured to identify a model feature of the scan model, and convert the scan model according to the model feature to obtain a converted model located in a preset spatial coordinate system.

The determination unit 1203 is configured to determine a target region where a target element in the converted model is located, and determine a model to be processed from the converted model based on the target region, where the target element constitutes the target object.

The generation unit 1204 is configured to perform a modeling processing on the model to be processed to generate a printable digital model.

Optionally, the acquisition unit 1201 is configured to:
Obtain an initial model of the target object, where the initial model is a three-dimensional model composed of a plurality of triangular meshes;
Detect all holes in the initial model, and determine a target hole among all of the holes; and
Fill the target hole along a surface trend of original triangular meshes around a boundary of the target hole to obtain the scan model.

Optionally, the acquisition unit 1201 is configured to:
Count a first number of vertices of triangular meshes on the boundary of each hole, and determine a hole with the first number less than a first threshold as the target hole; and/or
Calculate a side length of all triangular meshes on the boundary of each hole, and determine a hole with the side length less than a second threshold as the target hole, where the side length is an average side length and/or a weighted side length.

Optionally, the acquisition unit 1201 is configured to:
Detect, according to a topological structure, a triangular patch composed of triangular meshes in a target model, where the target model is the initial model or the scan model obtained after a hole filling; and
In a case where the triangular patch is not connected to a target main body in the target model, determine whether a connected region of the triangular patch is less than a third threshold, and/or whether a number of triangular meshes forming the triangular patch is less than a fourth threshold, and if the connected region of the triangular patch is less than the third threshold, and/or the number of triangular meshes forming the triangular patch is less than the fourth threshold, remove the triangular patch to obtain the scan model;
Where the target main body is a largest connected region in the target model.

Optionally, in the apparatus 1200, the model feature includes a number of the target element and a position feature of the target element in the scan model.

Optionally, the conversion unit 1202 is configured to:
Obtain a coordinate center position in the preset spatial coordinate system, and determine a center position of a bounding box that encloses the scan model based on the coordinate center position;
Fit a contact surface between a first part of the target object and a second part of the target object according to the number of the target element and the position feature, where the first part and the second part form an entirety of the target object, and the first part and the second part are each composed of at least one target element;
Calculate a shape of the first part and/or a shape of the second part based on the number of the target element and the position feature, and determine a target axis based on the shape of the first part and/or the shape of the second part; and
Convert the scan model according to the center position of the bounding box, the target axis, and the contact surface to obtain the converted model located in the preset spatial coordinate system.

Optionally, the determination unit 1203 is configured to:
Identify an initial region where the target element in the converted model is located;
Obtain a base type to be added, and determine a boundary criterion according to the base type, where the boundary criterion is configured to limit an expansion degree of the initial region; and
Perform an expansion processing on the initial region based on a preset expansion principle and the boundary criterion to obtain the target region, where the preset expansion principle is a topological neighborhood extension without exceeding an arch-shaped region of the target object.

Optionally, the generation unit 1204 is configured to:
Obtain modeling parameters, where the modeling parameters include a shell thickness, a base type, and a base height;
Perform a shelling processing on the model to be processed based on the shell thickness to obtain a shelled model; and
Add a base model to the shelled model based on the base type and the base height to generate the printable digital model.

Optionally, the generation unit 1204 is configured to:
Extend the base height downward from a lowest point of a bottom of the shelled model according to the base type to add the base model to the shelled model; and
Perform a smoothing processing on a connection region between the base model and the shelled model using a triangular mesh interpolation to generate the printable digital model.

Optionally, the modeling parameters include a support type and text to be added.

Optionally, the generation unit 1204 is further configured to:
Add a mesh to the base model using a standard template model, where a mesh height corresponds to the base height;
Add a support model to the shelled model with the added mesh based on the support type;
Vectorize the text to be added to generate a text model, and add the text model to a preset position of the shelled model; and
Perform a fusion processing on the shelled model, the base model, the support model, and the text model to generate the printable digital model.

Optionally, the target object is a target jaw, the scan model is a jaw model, the shelled model is a jaw shell, and the support model is an articulator model.

Optionally, the generation unit 1204 is configured to:
Add the articulator model to the jaw shell based on a placement principle, where the placement principle is that the articulator model is placed at a front end and a rear end of the jaw shell, and an upper base and a lower base of the articulator model are flush with and contact the base model during placement;
Perform a collision detection on the jaw shell and a connecting rod of the articulator model to generate a detection result, where the connecting rod is configured to connect the upper base and the lower base of the articulator model; and
If the detection result indicates that the connecting rod collides with the jaw shell, adjust the articulator model based on a collision depth and a collision direction in the detection result until the connecting rod does not collide with the jaw shell.

The apparatus for generating the digital model shown in the embodiment of FIG. 12 can be configured to execute the technical solution of the above method embodiment, and its implementation principle and technical effect are similar and will not be repeated here.

FIG. 13 is a schematic structural diagram of an electronic device provided by an embodiment of the present disclosure. Referring now to FIG. 3, a schematic structural diagram of an electronic device 1300 suitable for implementing an embodiment of the present disclosure is shown. The electronic device 1300 in the embodiment of the present disclosure may include, but is not limited to, mobile terminals such as mobile phones, laptops, digital broadcast receivers, PDAs (Personal Digital Assistants), PADs (Tablet Computers), PMPs (Portable Multimedia Players), vehicle-mounted terminals (e.g., car navigation terminals), wearable electronic devices, etc., and fixed terminals such as digital TVs, desktop computers, smart home devices, etc. The electronic device shown in FIG. 13 is merely an example and should not impose any limitation on the functionality and scope of use of the embodiments of the present disclosure.

As shown in FIG. 13, the electronic device 1300 may include a processing device 1301 (e.g., a central processing unit, a graphics processing unit, etc.), which may perform various appropriate actions and processes to implement the method for generating a digital model according to the embodiments described in the present disclosure, according to a program stored in a Read-Only Memory (ROM) 1302 or a program loaded from a storage device 1308 into a Random Access Memory (RAM) 1303. In the RAM 1303, various programs and data necessary for the operation of the electronic device 1300 are also stored. The processing device 1301, the ROM 1302, and the RAM 1303 are connected to each other via a bus 1304. An Input/Output (I/O) interface 1305 is also connected to the bus 1304.

Generally, the following devices can be connected to the I/O interface 1305: an input device 1306 including, for example, a touch screen, touchpad, keyboard, mouse, camera, microphone, accelerometer, gyroscope, etc.; an output device 1307 including, for example, a Liquid Crystal Display (LCD), speaker, vibrator, etc.; a storage device 1308 including, for example, a magnetic tape, hard disk, etc.; and a communication device 1309. The communication device 1309 may allow the electronic device 1300 to communicate with other devices wirelessly or by wire to exchange data. Although FIG. 13 shows the electronic device 1300 having various devices, it should be understood that not all of the illustrated devices are required to be implemented or provided. More or fewer devices may alternatively be implemented or provided.

In particular, according to an embodiment of the present disclosure, the process described above with reference to the flowchart may be implemented as a computer software program. For example, an embodiment of the present disclosure includes a computer program product, which includes a computer program carried on a non-transitory computer-readable medium, the computer program containing program code configured to execute the method shown in the flowchart, thereby implementing the method for generating a digital model as described above. In such an embodiment, the computer program may be downloaded and installed from a network via the communication device 1309, or installed from the storage device 1308, or installed from the ROM 1302. When the computer program is executed by the processing device 1301, the above-described functions defined in the method of the embodiment of the present disclosure are performed.

It should be noted that the computer-readable medium mentioned in the present disclosure may be a computer-readable signal medium or a computer-readable storage medium, or any combination of the two. The computer-readable storage medium may be, for example, but not limited to, an electrical, magnetic, optical, electromagnetic, infrared, or semiconductor system, apparatus, or device, or any combination thereof. More specific examples of the computer-readable storage medium may include, but are not limited to: an electrical connection having one or more wires, a portable computer disk, a hard disk, a Random Access Memory (RAM), a Read-Only Memory (ROM), an Erasable Programmable Read-Only Memory (EPROM or flash memory), an optical fiber, a portable Compact Disk Read-Only Memory (CD-ROM), an optical storage device, a magnetic storage device, or any suitable combination thereof. In the present disclosure, a computer-readable storage medium may be any tangible medium that contains or stores a program, which may be used by or in connection with an instruction execution system, apparatus, or device. In the present disclosure, a computer-readable signal medium may include a data signal propagated in baseband or as part of a carrier wave, carrying computer-readable program code. Such propagated data signals may take various forms, including but not limited to electromagnetic signals, optical signals, or any suitable combination thereof. A computer-readable signal medium may also be any computer-readable medium other than a computer-readable storage medium, which may send, propagate, or transmit a program configured for use by or in connection with an instruction execution system, apparatus, or device. The program code embodied on the computer-readable medium may be transmitted using any appropriate medium, including but not limited to: wire, optical cable, RF (radio frequency), etc., or any suitable combination thereof.

In some implementations, a client, a terminal, may communicate using any currently known or future developed network protocol such as HTTP (Hyper Text Transfer Protocol), and may interconnect with any form or medium of digital data communication (e.g., a communication network). Examples of communication networks include a Local Area Network ("LAN"), a Wide Area Network ("WAN"), the Internet (e.g., the Internet), and peer-to-peer networks (e.g., ad hoc peer-to-peer networks), as well as any currently known or future developed network.

The above-mentioned computer-readable medium may be included in the above-mentioned electronic device, or may exist separately without being assembled into the electronic device.

Optionally, when the one or more programs are executed by the electronic device, the electronic device may also perform other steps described in the above embodiments.

Computer program code for carrying out the operations of the present disclosure may be written in one or more programming languages or combinations thereof, including object-oriented programming languages such as Java, Smalltalk, C++, and conventional procedural programming languages such as the "C" programming language or similar programming languages. The program code may execute entirely on the user's computer, partly on the user's computer, as a stand-alone software package, partly on the user's computer and partly on a remote computer, or entirely on the remote computer or terminal. In the scenario involving a remote computer, the remote computer may be connected to the user's computer through any kind of network, including a Local Area Network (LAN) or a Wide Area Network (WAN), or may be connected to an external computer (e.g., via the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, program segment, or portion of code, which contains one or more executable instructions configured to implement the specified logical function(s). It should also be noted that, in some alternative implementations, the functions noted in the blocks may occur out of the order noted in the figures. For example, two blocks shown in succession may, in fact, be executed substantially concurrently, or they may sometimes be executed in the reverse order, depending upon the functionality involved. It will also be noted that each block of the block diagrams and/or flowchart illustrations, and combinations of blocks in the block diagrams and/or flowchart illustrations, may be implemented by dedicated hardware-based systems that perform the specified functions or operations, or by combinations of dedicated hardware and computer instructions.

The units described in the embodiments of the present disclosure may be implemented by software or hardware. Wherein, the name of a unit does not, in some cases, constitute a limitation on the unit itself.

The functions described herein above may be performed, at least in part, by one or more hardware logic components. For example, without limitation, exemplary types of hardware logic components that may be used include: Field Programmable Gate Arrays (FPGAs), Application Specific Integrated Circuits (ASICs), Application Specific Standard Products (ASSPs), Systems on Chips (SOCs), Complex Programmable Logic Devices (CPLDs), etc.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination of the foregoing. More specific examples of the machine-readable storage medium would include an electrical connection based on one or more wires, a portable computer disk, a hard disk, a Random Access Memory (RAM), a Read-Only Memory (ROM), an Erasable Programmable Read-Only Memory (EPROM or Flash memory), an optical fiber, a portable Compact Disk Read-Only Memory (CD-ROM), an optical storage device, a magnetic storage device, or any suitable combination of the foregoing.

It should be noted that in this document, relational terms such as "first" and "second" are used merely to distinguish one entity or operation from another entity or operation, and do not necessarily require or imply any such actual relationship or order between these entities or operations. Moreover, the terms "include", "comprise", or any other variation thereof are intended to cover non-exclusive inclusion, such that a process, method, article, or gateway that includes a list of elements includes not only those elements but also other elements not expressly listed, or also includes elements inherent to such process, method, article, or gateway. Without further limitation, an element defined by the phrase "comprising a ..." does not preclude the presence of additional identical elements in the process, method, article, or gateway that includes the element.

The above description is merely specific embodiments of the present disclosure to enable those skilled in the art to understand or implement the present disclosure. Various modifications to these embodiments will be readily apparent to those skilled in the art, and the generic principles defined herein may be implemented in other embodiments without departing from the spirit or scope of the present disclosure. Thus, the present disclosure is not intended to be limited to the embodiments described herein but is to be accorded the widest scope consistent with the principles and novel features disclosed herein.

### INDUSTRIAL APPLICABILITY

In the method for generating the digital model provided by the present disclosure, the scan model of the target object is obtained. A model feature of the scan model is identified, and the scan model is converted according to the model feature to obtain the converted model located in the preset spatial coordinate system. The target region where the target element in the converted model is located is determined, and the model to be processed is cut out from the converted model based on the target region, where the target element constitutes the target object. The modeling processing is performed on the model to be processed to generate the printable digital model. In the provided method, after importing the scan model and the modeling parameters configured by the user, the scan model is converted and cropped to obtain the model to be processed suitable for the modeling processing. Simultaneously, the scan model is adjusted and optimized, facilitating the subsequent generation of the printable model with a good effect based on the modeling parameters. Moreover, during the process of generating the digital model based on the scan model, the user does not need to perform interactive operations, simplifying the steps of generating the digital model. The method has strong industrial applicability.

## Claims

1. A method for generating a digital model, comprising:
obtaining a scan model of a target object;
identifying a model feature of the scan model, converting the scan model according to the model feature, and obtaining a converted model located in a preset spatial coordinate system;
determining a target region where a target element in the converted model is located, and cutting out a model to be processed from the converted model based on the target region, the target element constituting the target object; and
performing a modeling processing on the model to be processed, and generating a printable digital model.

2. The method according to claim 1, wherein the obtaining the scan model of the target object comprises:
obtaining an initial model of the target object, wherein the initial model is a three-dimensional model comprising a plurality of triangular meshes;
detecting all holes in the initial model, and determining a target hole among all of the holes; and
filling the target hole along a surface trend of original triangular meshes around a boundary of the target hole, and obtaining the scan model.

3. The method according to claim 2, wherein the determining the target hole among all of the holes comprises:
counting a first number of vertices of triangular meshes on the boundary of each hole, and determining a hole with the first number less than a first threshold as the target hole; and/or
calculating a side length of all triangular meshes on the boundary of each hole, and determining a hole with the side length less than a second threshold as the target hole, wherein the side length is an average side length and/or a weighted side length.

4. The method according to claim 2, wherein the obtaining the scan model of the target object comprises:
detecting, according to a topological structure, a triangular patch comprising triangular meshes in a target model, wherein the target model is the initial model or the scan model obtained after a hole filling; and
in a condition that the triangular patch is not connected to a target main body in the target model, determining whether a connected region of the triangular patch is less than a third threshold, and/or whether a number of triangular meshes forming the triangular patch is less than a fourth threshold, and in response to the connected region of the triangular patch being determined less than the third threshold, and/or the number of triangular meshes forming the triangular patch being determined less than the fourth threshold, removing the triangular patch, and obtaining the scan model;
wherein the target main body is a largest connected region in the target model.

5. The method according to claim 4, wherein the triangular patch is a connected region formed by at least one triangular mesh, and the determining, in the condition that the triangular patch is not connected to the target main body in the target model, whether the connected region of the triangular patch is less than the third threshold, and/or whether the number of triangular meshes forming the triangular patch is less than the fourth threshold, and in response to the connected region of the triangular patch being determined less than the third threshold, and/or the number of triangular meshes forming the triangular patch being determined less than the fourth threshold, removing the triangular patch, and obtaining the scan model, comprises:
in the condition that any triangular patch is not connected to the target main body and the connected region of the any triangular patch is less than the third threshold, determining the any triangular patch as a floating patch, deleting the floating patch from the target model, and obtaining the scan model.

6. The method according to claim 4, wherein the determining, in the condition that the triangular patch is not connected to the target main body in the target model, whether the number of triangular meshes forming the triangular patch is less than the fourth threshold, and in response to the number of triangular meshes forming the triangular patch being determined less than the fourth threshold, removing the triangular patch, and obtaining the scan model, comprises:
in the condition that any triangular patch is not connected to the target main body and the number of triangular meshes forming the any triangular patch is less than the fourth threshold, deleting the any triangular patch from the target model, and obtaining the scan model.

7. The method according to claim 1, wherein the model feature comprises a number of the target element and a position feature of the target element in the scan model, and the converting the scan model according to the model feature, and obtaining the converted model located in the preset spatial coordinate system comprises:
obtaining a coordinate center position in the preset spatial coordinate system, and determining a center position of a bounding box that encloses the scan model based on the coordinate center position;
fitting a contact surface between a first part of the target object and a second part of the target object according to the number of the target element and the position feature, wherein the first part and the second part form an entirety of the target object, and each the first part and the second part comprises at least one target element;
calculating a shape of the first part and/or a shape of the second part based on the number of the target element and the position feature, and determining a target axis based on the shape of the first part and/or the shape of the second part; and
converting the scan model according to the center position of the bounding box, the target axis, and the contact surface, and obtaining the converted model located in the preset spatial coordinate system.

8. The method according to claim 1, wherein the determining the target region where the target element in the converted model is located comprises:
identifying an initial region where the target element in the converted model is located;
obtaining a base type to be added, and determining a boundary criterion according to the base type, wherein the boundary criterion is configured to limit an expansion degree of the initial region; and
performing an expansion processing on the initial region based on a preset expansion principle and the boundary criterion, and obtaining the target region, wherein the preset expansion principle is a topological neighborhood extension without exceeding an arch-shaped region of the target object.

9. The method according to claim 1, wherein the performing modeling processing on the model to be processed, and generating the printable digital model comprises:
obtaining modeling parameters, wherein the modeling parameters comprise a shell thickness, a base type, and a base height;
performing a shelling processing on the model to be processed based on the shell thickness to obtain a shelled model; and
adding a base model to the shelled model based on the base type and the base height to generate the printable digital model.

10. The method according to claim 9, wherein the adding the base model to the shelled model based on the base type and the base height to generate the printable digital model comprises:
extending the base height downward from a lowest point of a bottom of the shelled model according to the base type to add the base model to the shelled model; and
performing a smoothing processing on a connection region between the base model and the shelled model using a triangular mesh interpolation to generate the printable digital model.

11. The method according to claim 9, wherein the modeling parameters comprise a support type and text to be added, and after adding the base model to the shelled model, the method further comprises:
adding a mesh to the base model using a standard template model, wherein a mesh height corresponds to the base height;
adding a support model to the shelled model with the added mesh based on the support type;
vectorizing the text to be added to generate a text model, and adding the text model to a preset position of the shelled model; and
performing a fusion processing on the shelled model, the base model, the support model, and the text model, and generating the printable digital model.

12. The method according to claim 11, wherein the target object is a target jaw, the scan model is a jaw model, the shelled model is a jaw shell, and the support model is an articulator model,
the adding the support model to the shelled model with the added mesh based on the support type comprises:
adding the articulator model to the jaw shell based on a placement principle, wherein the placement principle is that the articulator model is placed at a front end and a rear end of the jaw shell, and an upper base and a lower base of the articulator model are flush with and contact the base model during placement;
performing a collision detection on the jaw shell and a connecting rod of the articulator model , and generating a detection result, wherein the connecting rod is configured to connect the upper base and the lower base of the articulator model; and
in a condition that the detection result indicates that the connecting rod collides with the jaw shell, adjusting the articulator model based on a collision depth and a collision direction in the detection result until the connecting rod does not collide with the jaw shell.

13. The method according to claim 12, further comprising:
performing a font vectorization on character-type texts, and obtaining a text model in a vector form, adding the text model to the jaw model, comprising:
calculating a starting point for each text on the jaw model according to a placement position of each text on the jaw model; and
arranging the text model corresponding to each text on the jaw model according to the starting point of each text.

14. The method according to claim 13, wherein determining the placement position comprises:
dividing a dental arch of the jaw model, and obtaining a placement region;
calculating an overall text arrangement segment in the placement region; and
calculating an initial text position based on the segment as the placement position.

15. The method according to claim 9, wherein the shell thickness and a base width of the base model are the same, and the bottom of the shelled model is a region where a tooth root connects to a gum.

16. The method according to claim 1, wherein the model feature comprises a jaw model feature, the target element comprises a single tooth, and the jaw model feature comprises a number of the single tooth and position information of the single tooth in the jaw model.

17. The method according to claim 1, wherein the converting the scan model according to the model feature, and obtain the converted model located in the preset spatial coordinate system comprises:
straightening the scan model according to the model feature to obtain the converted model, wherein straightening the scan model comprises aligning the scan model to the preset spatial coordinate system.

18. An apparatus for generating a digital model, comprising:
an acquisition unit configured to obtain a scan model of a target object;
a conversion unit configured to identify a model feature of the scan model, convert the scan model according to the model feature, and obtain a converted model located in a preset spatial coordinate system;
a determination unit configured to determine a target region where a target element in the converted model is located, and determine a model to be processed from the converted model based on the target region, the target element constituting the target object; and
a generation unit configured to perform a modeling processing on the model to be processed, and generate a printable digital model.

19. An electronic device, comprising:
a storage device;
a processor; and
a computer program;
wherein the computer program is stored in the storage device and is configured to be executed by the processor to implement the method for generating the digital model according to any one of claims 1 to 17.

20. A computer-readable storage medium having a computer program stored thereon, wherein the computer program, when executed by a processor, implements the steps of the method for generating the digital model according to any one of claims 1 to 17.
